(19) Europäisches Patentamt
European Patent Office
Office européen des brevets

(11) **EP 2 998 272 B1**

(12) **EUROPÄISCHE PATENTSCHRIFT**

(45) Veröffentlichungstag und Bekanntmachung des Hinweises auf die Patenterteilung:
**25.04.2018 Patentblatt 2018/17**

(51) Int Cl.:
*C01B 33/193* *(2006.01)*       *C08K 3/36* *(2006.01)*
*C04B 20/00* *(2006.01)*       *G10K 11/162* *(2006.01)*

(21) Anmeldenummer: **15185344.7**

(22) Anmeldetag: **15.09.2015**

(54) **ANORGANISCHE, SILICA-BASIERTE FESTSTOFF-SCHAUMPARTIKEL MIT GESCHLOSSENEN INNENPOREN, IHRE HERSTELLUNG UND IHRE VERWENDUNG ALS FÜLL- ODER SPEICHERSTOFF**

INORGANIC, SILICA BASED SOLID FOAM PARTICLES WITH CLOSED INTERNAL PORES, THEIR PREPARATION AND THEIR USE AS A FILLING OR STORAGE MATERIAL

PARTICULE DE MOUSSE/DE MATIERE SOLIDE A BASE DE SILICE, ANORGANIQUE PRESENTANT DES PORES INTERNES FERMES, SA FABRICATION ET SON UTILISATION EN TANT QUE CHARGE OU RESERVES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.09.2014 DE 102014113411**

(43) Veröffentlichungstag der Anmeldung:
**23.03.2016 Patentblatt 2016/12**

(73) Patentinhaber: **Fraunhofer-Gesellschaft zur Förderung der angewandten Forschung e.V.**
**80686 München (DE)**

(72) Erfinder:
• **Kuhn, Dominik**
**97074 Würzburg (DE)**
• **Mandel, Karl-Sebastian**
**97074 Würzburg (DE)**

• **Somorowsky, Ferdinand**
**97318 Kitzingen (DE)**

(74) Vertreter: **Strehl Schübel-Hopf & Partner**
**Maximilianstrasse 54**
**80538 München (DE)**

(56) Entgegenhaltungen:
**EP-B1- 1 648 824       WO-A1-01/74712**
**WO-A1-03/054089       WO-A1-2013/117583**

• **MANDEL, K. ET AL: "MODIFIED SUPERPARAMAGNETIC NANOCOMPOSITE MICROPARTICLES FOR HIGHLY SELECTIVE HGII OR CUII SEPARATION AND RECOVERY FROM AQUEOUS SOLUTIONS", ACS APPL. MATER. INTERFACES, Bd. 4, Nr. 10, September 2012 (2012-09), Seiten 5633-5642, XP002753225, DOI: 10.1021/AM301910M**

EP 2 998 272 B1

**Beschreibung**

Die Erfindung betrifft gefällte Siliciumdioxid-Partikel mit inneren geschlossenen Poren und einem relativ niedrigen spezifischen Gewicht, die sich als Füllstoff in anorganischen Materialien oder in organischen Polymeren eignen, der dem jeweiligen Material eine gute Wärmedämmung und/oder einen guten Schallschutz verleiht. Die Siliciumdioxid-Partikel adsorbieren bei ihrer Fällung in der Fällungslösung befindliche Adsorbentien und eignen sich daher auch zur Verwendung als Speichermaterialien, z.B. solche mit kontrollierter Freisetzung.

Silica ($SiO_2$), beispielsweise in Form von Fällungskieselsäure oder pyrogener Kieselsäure (Evonik Markenname: Aerosil), ist ein Hunderttausendtonnen-Produkt, welches für vielerlei Anwendungen eingesetzt wird (z.B. als Trägermaterial für Katalysatoren, Füllstoff z. B in Autoreifen, stationäre Phase in Ionentauscher- und Chromatographiesäulen und dergleichen). Für die aufgeführten Anwendungen wird in der Regel ein sowohl thermisch als auch chemisch möglichst beständiger Feststoff benötigt, der ggf. chemisch oberflächenmodifizierbar ist. Hier hat sich $SiO_2$ als vorteilhaft erwiesen. Wird $SiO_2$ als pyrogene Kieselsäure hergestellt, ist ein Flammenprozess nötig, bei dem ein Chlorsilan mit Wasserstoff und Sauerstoff zu HCl und $SiO_2$ reagiert. Der Prozess, in Marktführerschaft von Evonik durchgeführt, ist energetisch aufwändig und teuer, da die benötigten Chlorsilane in der Regel aus reinem Silizium gewonnen werden, welches zuvor ebenfalls aufwändig hergestellt werden muss. Zudem ist die Oberfläche des $SiO_2$ durch den Flammenprozess nur noch wenig reaktiv, da die aktiven Si-OH Gruppen durch die hohen Temperaturen "weggebrannt" sind.

Fällungskieselsäuren werden aus kostengünstigem Wasserglas (Na- oder Ka-Silicat) hergestellt. Dabei wird das Wasserglas in manchen Fällen in Schwefelsäure getropft. Es sind unterschiedliche Varianten des Prozesses bekannt. In einer Alternative werden Alkali- oder Erdalkalisilikat und eine Säure gleichzeitig oder nacheinander in eine wässrige Alkali/Erdalkalilösung oder in eine Base eingetropft, wobei z.B. durch eine Unterbrechung des Zutropfens und Ansäuerns der fertiggestellten Mischung ein breiter Porenradius einstellbar ist, siehe EP 1 764 344 A2 oder US 6,268,424 B1, während bei einem relativ ähnlichen Verfahren Teilchen mit einer BET-Oberfläche zwischen 50 und 250 m$^2$/g erhalten wurden (US 5,225,177). Bei spezifischer Kontrolle des pH-Wertes und/oder der Verwendung eines wasserlöslichen Elektrolyten, dessen Anionen unter Chlorid und Sulfat ausgewählt werden, erhält man Teilchen mit extrem hohen BET-Oberflächen und Poren im Bereich von unter 10 nm, siehe z. B. EP 0 308 165 A2, EP 0 535 943 A1 oder WO 94/10087 A1. Derartige Teilchen eignen sich als Abrasivstoffe in Zahnpasten. Fällungskieselsäuren mit einem hohen BET/CTAB-Verhältnis und ihre Herstellung sind in EP 1 295 850 A1 offenbart. Der Einsatz dieser Kieselsäureprodukte ist hauptsächlich in Elastomerenmischungen für Reifen.

Eine Fällungskieselsäure mit einer BET-Oberfläche von 25-350 m$^2$/g und einer CTAB-Oberfläche von 25-150 m$^2$/g wird gemäß EP 0 798 266 A1 erzeugt. Entscheidend ist unter anderem die Zulaufgeschwindigkeit. Die Fälltemperatur muss zwischen 60 und 90°C liegen. Weder Poren, die Einstellung von Porosität, noch die Verwendung von alkalischem Fällungsreagenz wird hier beschrieben.

Eine Erhöhung der mechanischen Stabilität von Fällungskieselsäuren durch deren Nachhärten in einer Base wird in WO 2010/012638 A1 beschrieben. Spezifische Fällungskieselsäuregranulate erhält man gemäß EP 0 937 755 A1 durch Sprühtrocknen einer auf einen pH-Wert von 2 bis 3,9 eingestellten Fällungskieselsäuresuspension. In den meisten Fällen wird nach dem Fällen der Kieselsäure der ausgefallene Feststoff aufwändig gewaschen und getrocknet. Erst durch den Trocknungsprozess kondensieren ausreichend viele Si-O-Bindungen zu $SiO_2$, so dass erst nach dem Trocknen ein stabiler Feststoff entsteht. Die Teilchen sind daher selbst bei hoher BET-Oberfläche häufig relativ massiv, d.h. sie besitzen ein immer noch relativ hohes spezifisches Gewicht, verglichen mit massivem $SiO_2$. Eine Trocknung mittels Mikrowellen offenbart EP 0 355 295 A2; die erhaltene Fällungskieselsäure kann als Wärmedämmmaterial im Tieftemperaturbereich genutzt werden.

Um definierte und gleichmäßige bzw. geordnete Mesoporen-Strukturen zu erhalten, wird in der Regel mit Templaten gearbeitet, was die Verfahren aufwändig und kostspielig macht. Als Template können Verbindungen wie Sepiolit (US 4,629,507) oder supramolekulare Anordnungen wie micellare Aggregate (Festphasen) eingesetzt werden, siehe G. J. de A. A. Soler-Illia et al., Chem. Rev. 102(11), S. 4093-4138 (2002). Bimodale Teilchen mit Mikro- und Mesoporen werden von V. Meynen et al. in Microporous and Mesoporous Materials 104, 26-38 (2007) beschrieben. Siliciumdioxid-Teilchen mit bimodalen Poren werden auch von N. Shinozaki et al. in J. Sol-Gel Sci. Technol. 43:275-282 (2007) offenbart.

US 3,798,174 beschreibt die Herstellung einer Silica-Zusammensetzung, die sich als Verdickungsmittel eignet. Sie wird hergestellt durch das Zugeben von Ammoniumhydroxid oder Ammoniak-Gas zu einer spezifisch eingestellten Alkalisilikat-Lösung und das anschließende Hinzufügen von $CO_2$ oder einer verdünnten Säure bis zur Erzielung eines pH-Wertes von 10,4 bis 11 hierzu, wobei ein Silica-Hydrosol entsteht. Das Sol muss schnell gebildet und anschließend schnell zu einer Ammoniumsalzlösung gegeben werden, um die Bildung eines Gels daraus zu verhindern. Der pH-Wert der gebildeten Silica-Suspension wird mit Säure auf etwa 7,5 eingestellt, und die darin enthaltenen Teilchen werden mit einer säurehaltigen Lösung gewaschen. Die Teilchen werden durch ihre Primärgröße von ca. 1 μm charakterisiert; weitere Eigenschaften werden nicht angegeben.

Der Effekt von Ammoniumsalzen auf dispersive und adsorptive Parameter von aus Natriummetasilicat-Lösung gefällten Siliciumdioxiden wurde von J. Zurawska et al. in "Colloids and Surfaces A: Physicochem. Eng. Aspects 223, 201-214 (2003) untersucht.

In WO 2013/117583, die die Herstellung von magnetischen Partikeln, eingeschlossen in einer silicatischen Matrix auf Wasserglasbasis, betrifft, wird anhand eines Vergleichsversuchs gezeigt, dass sich Klumpen eines kissenartigen, sehr porösen Materials aus SiO$_2$ bilden, wenn Milchsäure oder Äpfelsäure und daraufhin wässrige Ammoniak-Lösung zu einer Ammoniumhydroxid und HNO$_3$ enthaltenden Lösung zugegeben werden, derart, dass ein pH-Wert von über 10 erreicht wird, worauf bei 80°C eine Natriumsilicatlösung zugetropft wird. Die Konzentration des Ammoniumhydroxid in der Vorlage lässt sich aus den angegebenen Parametern (je nachdem, ob flüssige Milchsäure oder feste Äpfelsäure eingesetzt wird) mit ca. 2,5 bis 3 Mol/l errechnen. Wird der gleiche Ansatz bei 20°C durchgeführt, entstehen ähnlich große Klumpen, allerdings mit sehr regelmäßigen, wabenartigen Porenstrukturen. In dem Artikel "Modified Superparamagnetic Nanocomposite Microparticles for Highly Selective HgII or CuII Separation and Recovery from Aqueous Solutions", ACS Applied Materials & Interfaces 4, 5633-5642 (2012) berichten K. Mandel et al., dass sich dann, wenn eine wässrige Ammoniak-Lösung mit einem pH-Wert von 11,5 zu einer Wasserglas-Lösung mit einem pH von 12 gegeben wird, eine Suspension bildet, die sich beim Verdünnen oder Rühren schnell wieder auflöst. Erfolgt die Reaktion jedoch in Gegenwart von NO$_3^-$-Ionen mit einem Anteil von 27:1:0,4 der Komponenten NH$_4$OH:HNO$_3$:Na$_2$SiO$_3$, wird recht stabiles und gegenüber Alkali widerstandsfähiges, fast natriumfreies Siliciumdioxid ausgefällt, das unter bestimmten Bedingungen als weißer Feststoff mit honigwabenartigen Poren und einer BET-Oberfläche von 72 m$^2$/g anfällt.

Für den Fachmann zeigt sich aus der Literatur, dass oft nur kleine Schwankungen bei der Wahl der Bedingungen und Zusammensetzungen für das Herstellungsverfahren von Fällungskieselsäuren die Eigenschaften des Produktes massiv beeinflussen können. Da häufig aber nur spezifische Parameter im Fokus einer Veröffentlichung stehen, lässt sich nicht immer erkennen, wie sich diese Schwankungen auf andere Eigenschaften als die herausgehobenen auswirken. So werden häufig BET-Oberflächen und Porengrößen und -volumina angegeben, nur selten aber die tatsächlich erhaltenen spezifischen Gewichte. Das spezifische Gewicht ist jedoch ganz maßgeblich für den Einsatz der Silika-Partikel im Bereich der Füll- und Dämmstoffe: Je leichter die Teilchen sind, desto leichter sind die damit befüllten Materialien, was in vielerlei Hinsicht, darunter einem niedrigen Gewicht beim Transportieren und dgl., günstig ist.

Extrem leichte Silica-Partikel sind bekannt. Es handelt sich dabei um sogenannte Aerogele, die aus Silanen und unter Verwendung aufwändiger Techniken, darunter Trocknen unter superkritischen Bedingungen, hergestellt werden. Diese Aerogele sind so teuer, dass sie für die oben angesprochenen Anwendungszwecke nicht in Betracht kommen.

Mandel, K. et al: "Modified Superparamagnetic Nanocomposite Microparticles for Highly Selective HGII or CUII Separation and Recovery from Aqueous Soluctions", ACS Appl. Mater. Interfaces, Bd. 4, Nr. 10, September 2012 (2012-09), Seiten 5633-5642, offenbart die Herstellung von porösen Silica-Partikeln durch eine Fällungsreaktion von Wasserglas in einem alkalischen Medium. Die Herstellung erfolgt in einem ersten Schritt durch das Mischen von einer wässrigen NH$_3$-Lösung (25%) mit einer 0.5 M HNO$_3$-Lösung. Unter Rühren wird anschließend eine Natrium-Silikate-Lösung hinzugetropft. Das molare Verhältnis der Mischung (NH$_4$OH : HNO$_3$: Na$_2$SiO$_7$) beträgt 27 : 1 : 0,4. Die Fällungsreaktion wird bei Raumtemperatur durchgeführt. Nach der Ausfällung werden die Silica-Partikel abgefiltert, gewaschen und bei 70°C getrocknet.

WO 2013/117583 A1 offenbart ein Verfahren zur Herstellung von porösen Silica-Partikeln mit einem Durchmesser von max. einigen Millimetern durch die Fällung von Natrium-Wasserglas in einer Lösung, die NH$_3$ und HNO$_3$ enthält, bei einer Temperatur von 80°C.

Es ist Aufgabe der Erfindung, poröse Silica-Partikel aufzufinden, die gleichzeitig sehr kostengünstig herzustellen und in Relation zu bekannten Partikeln leicht sind.

Die Erfinder der vorliegenden Erfindung konnten überraschenderweise feststellen, dass dann, wenn die Vorlage für die Fällungsreaktion eine hohe Konzentration an Ammoniak (hier häufig - und bekanntlich strenggenommen nicht ganz korrekt - als Ammoniumhydroxid bzw. NH$_4$OH bezeichnet) enthält und die zugetropfte Lösung hochkonzentriertes Wasserglas (Natrium- und/oder Kaliumsilicat der Zusammensetzung M$_2$SiO$_3$ mit M = Na und/oder K) und/oder einen bestimmten molaren Anteil an Wasserglas, relativ zu NH$_4$OH, nicht unterschreitet, Silica-Partikel erhältlich sind, die zu mindestens 96 Gew.-%, vorzugsweise zu mindestens 97 Gew.-% und stärker bevorzugt zu mindestens 98,5 Gew.-% aus SiO$_2$ bestehen, in ihrem Inneren geschlossene Poren aufweisen, eine Heliumdichte (Reindichte) von unter 2,00 g/cm$^3$, vorzugsweise von unter 1,95 g/cm$^3$ und eine Rohdichte von unter 1,70 g/cm$^3$, vorzugsweise von unter 1,65 g/cm$^3$ besitzen. Die berechnete Porosität liegt dabei überraschend nur bei etwa 10 bis 30%, was zeigt, dass die Teilchen geschlossene Poren besitzen müssen, die der Messung mit Hilfe von Quecksilber, Helium oder Stickstoff nicht zugänglich sind. Die Größe der äußeren Poren liegt im Makroporen-Bereich (Messwerte bis über 300 nm bei Anwendung der Quecksilberporosimetrie) und ist wie auch die Porengrößenverteilung stark von den jeweiligen Verfahrensbedingungen abhängig. Die Erfinder konnten auch feststellen, dass es bei der Wahl der Bedingungen für das Herstellungsverfahren überraschenderweise nicht auf die Konzentration an zugegebener Säure sowie deren (anorganische) Anionen ankommt, sofern ein pH-Wert von mindestens ca. 11 gehalten wird, damit Teilchen mit den oben genannten Dichten entstehen. Eine Zugabe von chelatisierenden Substanzen wie Milch- und/oder Äpfelsäure ist dabei verzichtbar.

Das Verfahren zur Herstellung der Silicapartikel umfasst die folgenden Schritte:

a) Bereiten einer wässrigen Lösung, enthaltend mindestens 6 mol/l $NH_3$ bzw.$NH_4OH$ und eine organischen oder anorganische Säure mit einem pKs-Wert von 4,0 oder darunter, vorzugsweise in einer Konzentration von mindestens 0,05 mol/l,

b) Zutropfen einer wässrigen Wasserglas-Lösung zu der wässrigen Lösung gemäß (a), die mindestens 15, vorzugsweise mindestens 20 mol/l Wasserglas enthält und/oder in einer Menge, die nicht unter 10 Mol-%, bezogen auf die $NH_4OH$-Menge, liegt, wobei die Mischung gerührt und/oder mit Ultraschall behandelt wird, und

c) Abfiltrieren, Waschen und Trocknen des Niederschlags.

Aufgrund der neu aufgefundenen, überraschenden und besonderen Porenstruktur eignen sich die erfindungsgemäßen Silica-Partikel u.a. zur Verwendung als insbesondere wärme- und schalldämmende Füllstoffe oder als Speicherstoffe, z.B. mit Langzeit-Freisetzungswirkung.

Die erfindungsgemäßen Silica-Partikeln lassen sich, wie die Erfinder erstmals feststellen konnten, demnach zwar durch die dem Grunde nach bekannte Fällungsreaktion einer Wasserglaslösung (meist Natriumsilikatlösung) in einer basischen Lösung erzeugen, die Ammoniumionen, Hydroxidionen und Elektrolytionen (Anionen organischer oder anorganischer Säuren) enthält und einen pH-Wert von ca. 11 aufweist, wobei der pH-Wert in vorteilhafter Weise durch Zugabe der entsprechenden anorganischen oder organischen Säure eingestellt wird. Doch hat sich gezeigt, dass je nach angewandter Reaktionstemperatur und Wasserglaskonzentration der eingesetzten Säure und des Gehaltes an Ammonium die Porosität und die Porengröße beeinflusst werden kann. Dabei lassen sich durch die Kombination der oben angegebenen Verfahrensparameter im Inneren der Partikel gezielt geschlossene Porenstrukturen einstellen. Dies kann anhand von Quecksilberporosimetrie, Gaspyknometrie, erweiterter Porosimetrie und Oberflächenbestimmungen nach BET nachgewiesen werden. Der Natriumgehalt der Partikel kann anhand von EDX-Spektren oder mit Hilfe von optischer Emissionsspektroskopie(ICP OES) nachgewiesen werden. Auch konnten durch Zerbrechen/Zermahlen der Partikel unter dem REM (Rasterelektronenmikroskop) Bruchkanten aufgenommen werden, die zeigen, dass sich im Inneren der unverletzten Partikel geschlossene Poren befinden müssen.

Zum Auffinden der Randbedingungen für den Erhalt der erfindungsgemäßen Partikel diente ein "Standardansatz" wie nachfolgend angegeben, dessen Komponenten und Bedingungen in mehrfacher Hinsicht modifiziert wurden. Dabei ist anzumerken, dass die Erfinder erfindungsgemäße Partikel auch mit anderen Säuren wie Schwefelsäure hergestellt haben, so dass die Verwendung von Salpetersäure oder Phosphorsäure kein notwendiges Kriterium ist. Es kommt nämlich nicht oder nur wenig auf den Einsatz bestimmter Anionen an, sondern auf das Vorhandensein von als Anionen eines Elektrolyten fungierenden Ionen wie $NO_3^-$, $HPO_4^{2-}$, $PO_4^{3-}$, $Cl^-$ oder $SO_4^{2-}$. Es ist dabei auch nicht Bedingung, dass es sich bei der Säure um eine anorganische Säure handelt, sofern sie einen $pK_s$-Wert von unter 4,0, vorzugsweise unter 3,0 besitzt, also eine sehr starke, eine starke oder eine der Stärkeren unter den mittelstarken Brønstedt-Säuren ist. Anorganische Säuren sind bevorzugt.

Der "Standardansatz" nutzt die folgenden Zusammensetzungen:

- 17 ml 28 - 30%ige Ammoniumhydroxid-Lösung oder 20 ml 25%ige Ammoniumhydroxid-Lösung (0,27 mol)

- 20 ml 0,5 molare Salpetersäure (0,01 mol) oder 10 ml 0,25 molare Phosphorsäure (2,5 mmol)

- 2 ml 36 Gew.-% Natriumsilikatlösung (0,1 mol)

Die Edukte können käufliche Produkte sein, die ohne Aufreinigung eingesetzt werden. Die Ammoniaklösung und die jeweilige Säure werden im Kolben verrührt. Die Vorlage, bestehend aus der Ammoniak-/Ammoniumhydroxid-Lösung und der Säure, sollte so zusammengesetzt sein, dass sie einen pH-Wert von ungefähr 11 (vorzugsweise im Bereich von 10,5 bis 11,5) aufweist. Für die Durchführung bei unterschiedlichen Reaktionstemperaturen kann z.B. die Vorlage gekühlt oder erhitzt werden. Unter Rühren oder im Ultraschall wird die Wasserglaslösung zugetropft. Die gesamte Mischung wird im verschlossenen Kolben für eine kurze Weile, z.B.10 min gerührt, und der Niederschlag wird abfiltriert und mit einer adäquaten Menge an destilliertem Wasser, im Standardansatz etwa 250 ml, nachgewaschen. Das Präzipitat wird getrocknet, vorzugsweise über Nacht an Luft. Eine zusätzliche anschließende Trocknung bei 150°C ist möglich, sie verändert das Produkt jedoch nicht weiter. Die Ausbeute liegt in der Regel bei 70% der theoretisch maximalen Masse aus der Wasserglas-Lösung.

Für die Ansätze mit verringerter Wasserglas-Konzentration wird die Wasserglas-Ausgangslösung entsprechend mit destilliertem Wasser verdünnt. Für die Ansätze mit einem geringeren Ammonium-Gehalt wird eine entsprechend geringere Menge Ammoniumhydroxid-Lösung in den Kolben gegeben. Die Säure kann höher konzentriert zugegeben werden als im Standardansatz angegeben, was bei der Berechnung der Molkonzentrationen der übrigen Komponenten natürlich zu berücksichtigen ist.

Die chemische Zusammensetzung der Partikel wird durch die Variation der durchgeführten Parameter nicht verändert. Neben einem geringen Teil an Natrium (maximal 4 Gew.-%, in der Regel unter 2 Gew.-%, bevorzugt unter 1 Gew.-%) bestehen die Partikel nur aus Siliciumdioxid.

Die Temperatur hat einen nicht unbedeutenden Einfluss auf die Größe und Struktur der entstehenden Poren. Dies wurde anhand von Umsetzungen mit nitrathaltiger Reaktionslösung und phosphathaltiger Reaktionslösung festgestellt.

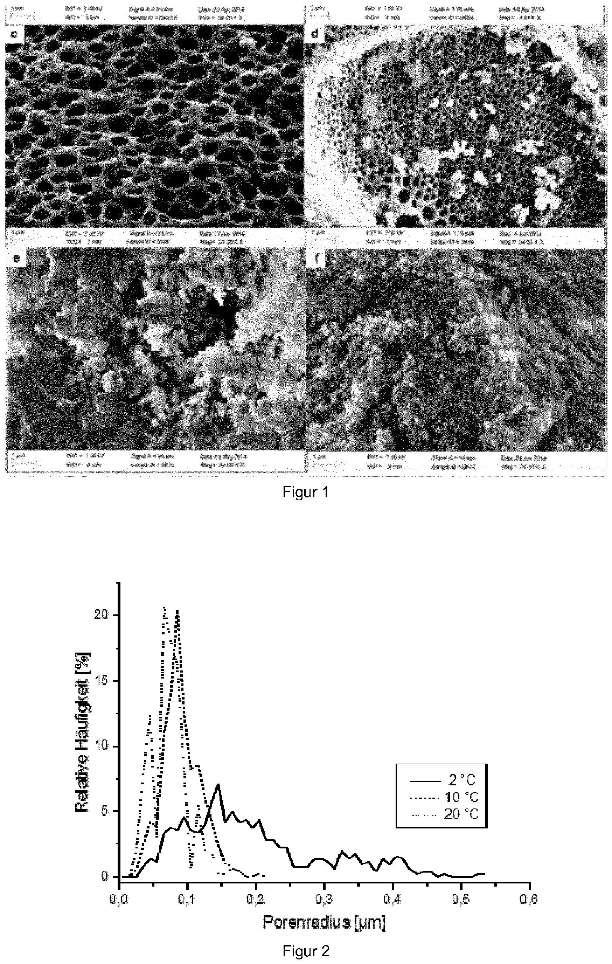

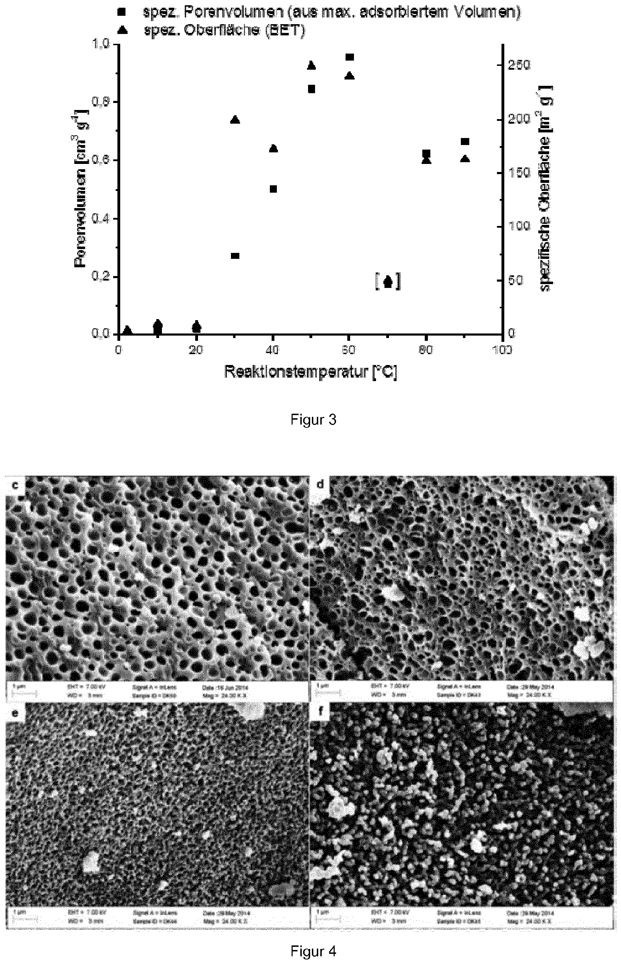

Bei Verwendung einer nitrathaltigen Reaktionslösung geht die Erhöhung der Reaktionstemperatur von 2°C auf zunächst 20°C mit einer deutlichen Verringerung der messbaren Porengröße einher, wobei sich der Aufbau der Partikel prinzipiell nicht ändert. Die Porenverteilung wird schmäler. Mittels graphischer Auswertung konnte diese qualitative Beobachtung quantifiziert werden, siehe **Figur 2** (untersucht wurden Partikel, die analog zum Standardansatz mit 17 ml 30%iger Ammoniumhydroxid-Lösung und 0,37 ml 65%iger $HNO_3$ als Vorlage und Zutropfen von 2 ml 36%iger Wasserglaslösung hergestellt worden waren). Ab ca. 30°C wandelt sich das Netzwerk von definierten Makroporen zu einem offenen Netzwerk, welches sich zwischen den Agglomeraten aus kolloidalem Silica bildet. Die Poren werden kleiner und das messbare Porenvolumen steigt, siehe die **Figur 3,** in der das aus der Stickstoffsorption berechnete Porenvolumen sowie die spezifische Oberfläche in Abhängigkeit von der Temperatur der nitrathaltigen Reaktionslösung aufgetragen ist. Ab 80°C nimmt das Volumen wieder ab und pendelt sich auf diesem Niveau ein. **Figur 1** zeigt REM-Aufnahmen dieser Partikel: c - f zeigen Proben mit zunehmender Reaktionstemperatur c) 2°C, d) 20°C, e) 30°C, f) 60°C.

Die kleinen Werte für die nach der BET-Methode vermessene Oberfläche der Partikel, die bei Temperaturen kleiner 20°C synthetisiert wurden, zeigen, dass die Stickstoffmoleküle kaum in die Partikel eindringen können und somit maßgeblich nur die äußere Oberfläche erfasst werden kann. Der zunehmend granulare Aufbau durch Zusammenlagerung der Primärpartikel bewirkt dann bis zu einer Temperatur von 60°C einen Anstieg der messbaren spezifischen Oberfläche etwa um den Faktor 33. Eine Erhöhung der Temperatur geht auch mit einer Vergrößerung der Primärpartikel einher. Größere Partikel haben bei gleicher Geometrie eine kleinere spezifische Oberfläche. Auf den ersten Blick würde man daher bei steigender Temperatur eine Verringerung der spezifischen Oberfläche erwarten. Allerdings liegen in der Wasserglaslösung noch Monomere und niedermolekulare Spezies vor, und zwar umso mehr, je niedriger die Temperatur ist. Die Primärpartikel an sich sind dort auch größer, allerdings ist auf Grund der Ostwald-Reifung bei höheren Temperaturen die Anzahl an niedermolekularen Spezies deutlich reduziert. Die anschließende Abnahme der Oberfläche bei Temperaturen oberhalb von 60°C lässt sich vor allem damit erklären, dass Primärpartikel wachsen und es kaum noch zu Anlagerung von Monomeren kommt, so dass mit größeren Primärpartikeln die spezifische Oberfläche wieder leicht abnimmt.

Bei in phosphathaltiger Lösung gefällten Partikeln sind die äußerlich sichtbaren Poren mehrheitlich nicht mehr kugelförmig, sondern unregelmäßig geformt. Bei näherer Betrachtung wird erkennbar, dass die Poren teilweise auch untereinander verbunden sind, so dass hier möglicherweise bereits bei den makroporösen Partikeln im äußeren Partikel-Bereich ein offenes Porennetzwerk zu finden ist. Mit steigender Temperatur wird die Porenradienverteilung schmaler, und der mittlere Porenradius verschiebt sich von 150 nm bei 10°C zu 50 nm bei 50°C. **Figur 4** zeigt einige REM-Aufnahmen von Partikeln, die analog zum Standardansatz mit 17 ml 30%iger Ammoniumhydroxid-Lösung und 1,5 ml 85%iger $H_3PO_4$ als Vorlage und Zutropfen von 2 ml 36%iger Wasserglaslösung hergestellt worden waren: c - f zeigen die Proben mit zunehmender Reaktionstemperatur: c) 10°C, d) 30°C, e) 40°C, f) 50°C.

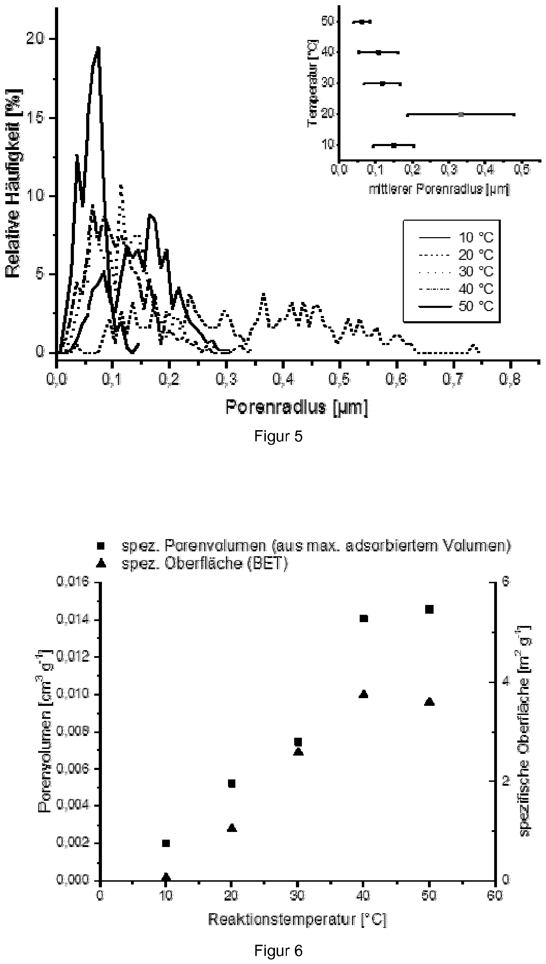

In **Figur 5** ist die graphische Porenanalyse und die erhaltene Porenradienverteilung der Makroporen aus den REM-Abbildungen der in phosphathaltiger Reaktionslösung gefällten Partikel gezeigt. Für das Porenvolumen sowie die mit der BET-Methode gemessene spezifische Oberfläche ist über den Reaktionstemperaturbereich eine Zunahme zu beobachten. Das spezifische Porenvolumen steigt dabei etwa um das Siebenfache (0,002 $cm^3$/g bei 10°C auf 0,015 $cm^3$/g bei 50°C), während die spezifische Oberfläche im gleichen Rahmen von 0,063 $m^2$/g auf 3,586 $m^2$/g steigt, was einer etwa 57fachen Vergrößerung entspricht, siehe **Figur 6.** Da sich allerdings die Änderungen gemäß den gemessenen Werten nur in sehr kleinem Maßstab abspielen, ist davon auszugehen, dass sich der Partikelaufbau der in phosphathaltiger Lösung hergestellten Proben im Temperaturbereich von 2°C bis 50°C nur im oberflächennahen Bereich ändert, während die nicht erfassten, geschlossenen Makroporen im Partikelinneren erhalten bleiben. Dies steht auch im Einklang mit den REM-Analysen.

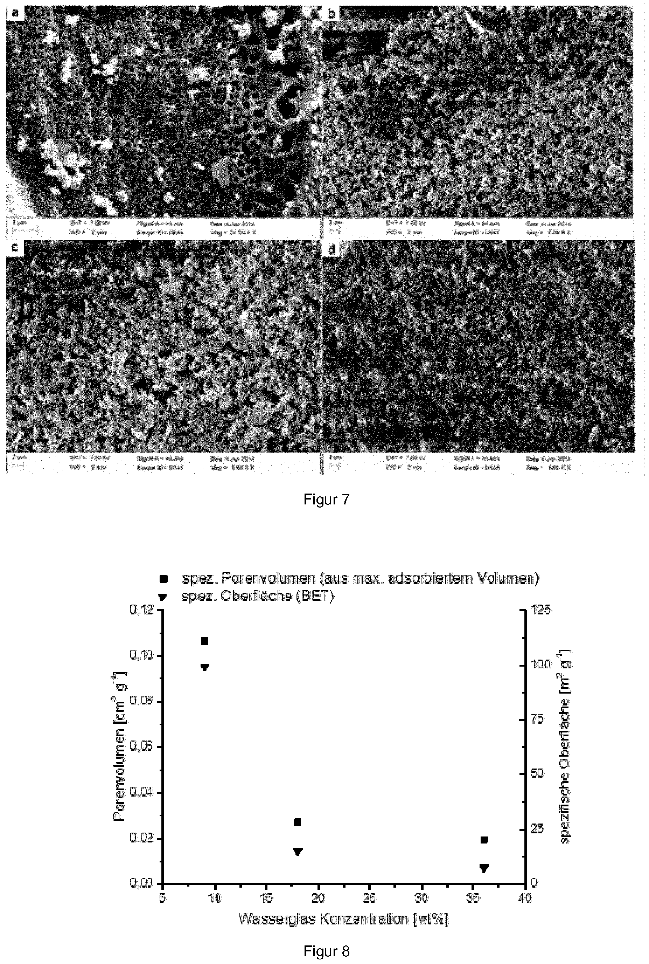

Zur Bestimmung des Einflusses der Wasserglaskonzentration wurden drei Lösungen mit $SiO_2$-Anteilen von 4,5 Gew.-%, 9 Gew.-% und 18 Gew.-% mit der 36 gew.-%igen Ausgangslösung gemäß Standardansatz verglichen. Durch die Verringerung des Wasserglasanteils in der Lösung nimmt der pH-Wert ab, ist aber trotzdem jeweils noch höher als der pH-Wert der Reaktionslösung. REM-Aufnahmen der Proben, die mit 36 gew.-%iger Wasserglas-Lösung hergestellt wurden, sind in Figur 7 a) mit solchen, hergestellt mit einer 18 gew.-%igen (b), einer 9 gew.-%igen (c) und einer 4,5 gew.-%igen Lösung (d), verglichen.

Die Verringerung des Wasserglasanteils durch Verdünnung mit Wasser, was einer gleichzeitigen Verringerung des pH-Wertes entspricht, resultiert in Partikeln, welche aus Agglomeraten von kleineren Primärpartikeln bestehen. Durch die unregelmäßige Zusammenlagerung dieser Primärpartikel entstehen Lücken, die ein offenes Porensystem bilden. Des Weiteren lässt sich erkennen, dass mit abnehmender Konzentration die Größe der Primärpartikel ebenfalls schrumpft. In Figur 8 sind das Porenvolumen und die spezifischen Oberfläche der verschiedenen Partikel, gemessen nach BET, in Abhängigkeit der Konzentration des Wasserglases (gefällt in nitrathaltiger Reaktionslösung) aufgetragen. Die Partikel, die mit 9 gew.-%iger oder noch stärker verdünnter Natriumsilikat-Lösung synthetisiert wurden, weisen eine deutlich größere messbare spezifische Oberfläche und ebenfalls ein deutlich größeres Porenvolumen auf, als die Partikel, die mit höher konzentrierter Lösung gefällt wurden. Vergleicht man die Resultate der Sorptionsmessungen der Partikel, bei denen die Ausgangskonzentration des Wasserglases verändert wurde, mit denen, die bei veränderter Reaktionstemperatur in nitrathaltiger Lösung hergestellt wurden, so stellt man fest, dass eine Erhöhung der Temperatur einen ähnlichen Effekt wie die Erniedrigung der Wasserglas-Konzentration hervorruft. In beiden Fällen verändert sich der Partikelaufbau von makroporösen Partikeln mit geschlossener Oberfläche / geschlossenen Poren zu Partikeln, die aus Agglomeraten von kolloidalen Silica-Partikeln bestehen und ein dementsprechend größeres Porensystem aufweisen.

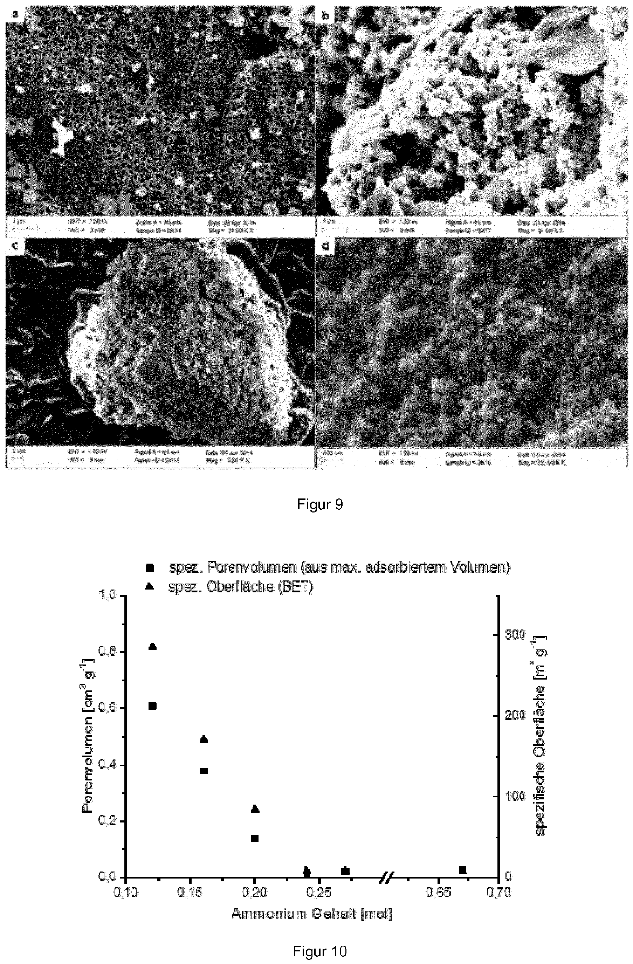

Auch der Einfluss des Ammoniumgehaltes in der Fällungslösung wurde untersucht. Zwischen der Ammoniumhydroxid-Menge und dem pH-Wert besteht ein linearer Zusammenhang: ca. 10,5 bei 0,14 mol, 10,9 bei 0,28 mol. Bei Vergrößerung der Stoffmenge auf 0,63 mol im Vergleich zum Standardansatz (0,27 mol) lässt sich an Hand der REM-Bilder (Figur 9, Aufnahmen der Partikel, welche in nitrathaltigen Reaktionslösungen mit verschiedenen Mengen Ammoniumhydroxid hergestellt wurden: a) 0,63 mol, b) 0,20 mol, c) 0,16 mol und d) 0,12 mol Ammoniumhydroxid) kein Unterschied bezüglich des Partikelaufbaus feststellen. In den Fällen mit 0,63 und mit 0,20 mol Ammoniumhydroxid entstehen makroporöse Partikel mit einer geschlossenen Oberfläche bzw. geschlossenen Poren. Bei Verringerung der Ammoniummenge lässt sich ab einer Stoffmenge von 0,20 mol eine Veränderung des Partikelaufbaus erkennen (siehe Fig. 10b). Die Partikel weisen keine Makroporen und keine geschlossene, homogene Oberfläche auf, sondern eine granulare Struktur. Diese erscheint zudem bei einer Stoffmenge von 0,12 mol makroskopisch eher gelartig. In **Figur 10** sind das ermittelte spezifische Porenvolumen aus dem adsorbierten Volumen an Stickstoff und die ermittelte spezifische Oberfläche nach der BET-Methode gegen die Menge Ammonium in der Reaktionslösung aufgetragen. Es wird erneut deutlich, dass zwischen den Partikeln, die mit 0,63 mol, 0,27 mol und 0,24 mol Ammoniumhydroxid in der nitrathaltigen Reaktionslösung gefällt wurden, kein signifikanter Unterschied erkennbar ist. Aus der Zunahme der spezifischen Oberfläche und des Porenvolumens bei geringerer Ammoniumhydroxid-Konzentration lässt sich auf einen zunehmend partikulären Aufbau und auf ein sich öffnenden Porensystem schließen.

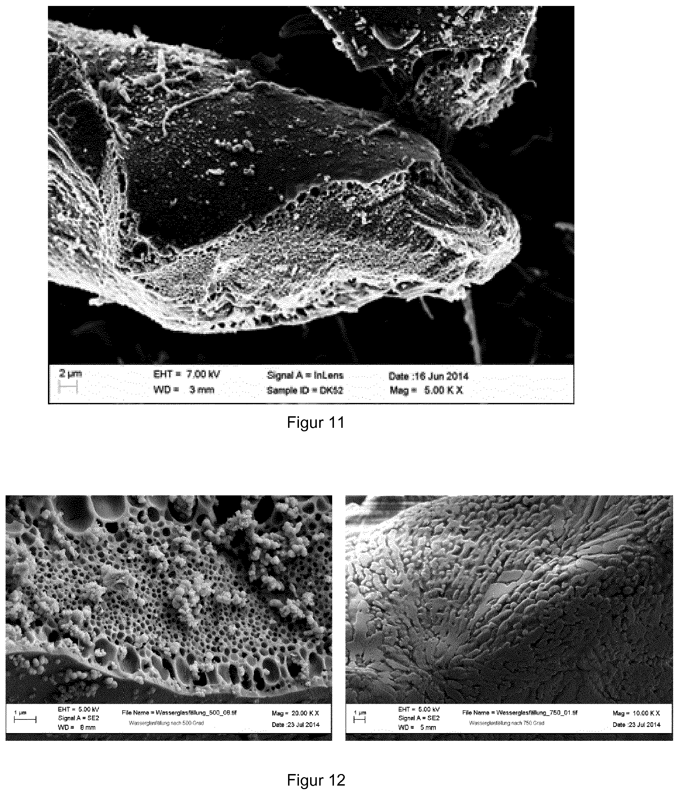

Wird die Synthese mit einem eingetauchten Ultraschallfinger durchgeführt, erhält man ohne weiteres Rühren sehr feine Partikel, welche sich im Partikelaufbau oder der Porenstruktur nicht von denen unter Standardbedingungen unterscheiden. Solche feinen Strukturen können direkt ohne weiteres Mahlen oder Sieben für die jeweilige Anwendung eingesetzt werden. Figur 11 zeigt ein Partikel, welches aus einer Ultraschallsynthese gewonnen und nicht weiter aufgearbeitet wurde.

Die porösen Partikel wurden im Ofen für 2 Stunden bei Temperaturen von 500°C, 750°C und 1000°C getempert.

Bei 500° lässt sich makroskopische keine Änderung der Struktur feststellen, die Partikel sind weiterhin feinkörnig. Bei 750°C und bei 1000°C kommt es zu einem leichten Zusammenbacken der einzelnen Partikel. Durch leichtes Schütteln können die Partikel wieder voneinander getrennt werden. Im Rasterelektronenmikroskop erkennt man, dass nach der Temperaturbehandlung bei 500°C keine Änderung der porösen Struktur festzustellen ist. Bei 750°C hat sich diese z. T. deutlich geändert. Zwar weisen einige Partikel noch die Ausgangsform auf, jedoch zeigen die meisten Partikel eine Veränderung. Zumindest die Oberfläche scheint geschmolzen zu sein und hat sich wie eine Haut über die poröse Struktur gelegt. Da immer noch das Relief der Poren zu sehen ist, ist es möglich, dass unter der Oberfläche weiterhin die ursprüngliche Form vorliegt. Dies wurde jedoch nicht nachgewiesen.

Mit Hilfe der vorgestellten Synthese lassen sich durch Veränderung der Syntheseparameter grundsätzlich zwei verschiedene Arten von Partikeln herstellen: Zum einen die erfindungsgemäßen, bisher so noch nicht beobachteten makroporösen Partikel mit geschlossenen Innenporen, die entweder eine nahezu geschlossene, homogene Oberfläche aufweisen (nitrathaltige Reaktionslösung) oder auch eine teilweise offene Oberfläche besitzen können (phosphathaltige Reaktionslösung). Bei den geschlossenen Poren im Inneren handelt es sich näherungsweise um kugelförmige, abgeschlossene Makroporen bis zu mehreren hundert Nanometern Größe. Die Porengröße kann über die Reaktionstemperatur bis zu einem gewissen Grad beeinflusst werden. Dabei gilt: Je höher die Reaktionstemperatur, desto kleiner die Makroporen. Die Veränderung des pH-Wertes über die Variation der verwendeten Menge an Ammoniak/Ammoniumhydroxid-Lösung sowie die Änderung der Konzentration der Wasserglas-Lösung haben bei den untersuchten Ansätzen keinen erkennbaren Einfluss auf die Makroporen. Diese Partikel, die aufgrund der für die Herstellung einsetzbaren Ausgangsmaterialien und der unaufwändigen Isolierung/Trocknung äußerst kostengünstig herstellbar sind, können erfindungsgemäß verwendet werden, z.B. als Isolationsfüllstoff (feines Pulver als Teil z.B. einer Dämmbeschichtung) zum Erreichen von Schallschutz und/oder Wärmedämmung oder als Speicherdepot, z.B. für Nährstoffe für zu züchtende Organismen oder für Dünger (die geschlossenen, mit einer Speichersubstanz befüllten Poren geben bei langsamer Auflösung der Partikel die darin eingeschlossenen Substanzen langsam ab). Die erfindungsgemäßen, feinen, porösen Silica-Schaumpartikel (insbesondere, wenn sie durch einen Ultraschallprozess erhalten wurden) eignen sich in ihrer Anwendung außerdem als Füllstoffe für (Natur)Kautschuk. Dabei fungieren die Partikel als kostengünstiger und leichter Füllstoff, der auf üblichem Wege eingearbeitet werden kann. Es darf vermutet werden, dass sie dabei auch als Reservoir für Enzyme dienen können, die möglicherweise bei der Kautschuk-Gummi-Fertigung eine entscheidende Rolle spielen. Darüber hinaus eignen sich die geschlossenen Poren bei dieser Anwendung ebenfalls als Reservoir für andere Chemikalien, so dass z.B. bei Verletzung der Kautschukmatrix und dadurch resultierende Exposition der Poren durch Luft eine Reaktion stattfinden, welche für einen self-healing Effekt ausgenutzt werden kann.

Die zweite Form von Partikeln entsteht, wenn die erfindungsgemäß aufgefundenen Konzentrationen der Komponenten und der Temperaturen bei der Herstellung nicht eingehalten werden. Solche Partikel weisen eine granulare Struktur auf und bestehen aus Aggregaten von Primärpartikeln aus kolloidalem Silica. Durch die Lücken zwischen den einzelnen Primärpartikeln entsteht ein offenes Porensystem mit einer spezifischen Oberfläche von bis zu 250 $m^2/g$. Die spezifische Oberfläche und das Porenvolumen wird dabei umso größer, je höher die Reaktionstemperatur und je kleiner die verwendete Ammoniakmenge. Diese Partikel können auch für andere Standardanwendungen genutzt werden, beispielsweise als Trägermaterialien, z.B. für Katalysatoren, als Füllstoffe in Ionentauschersäulen, als Filter für die Wasseraufbereitung (in einer Säule, aber auch als dünne membranartige Filter-Schicht).

Nachstehend soll die Erfindung anhand von Beispielen näher erläutert werden.

Die spezifische Oberfläche der Teilchen und das daraus abgeleitete maximale Porenvolumen wurden teilweise mit Hilfe der BET-Methode (DIN 66131) ermittelt. Die Porenanalyse wurde aber vor allem mit Quecksilberporosimetrie (DIN 66133) durchgeführt. Zur Dichtebestimmung wurde Gaspyknometrie nach DIN 66137 eingesetzt. Die Dichte wird dabei durch Division der Einwaage durch das gemessene Volumen berechnet. Als Messgas wurde Helium verwendet. Die Dichte lässt sich dabei nach der Formel

$$V_P = V_{Cell} + \frac{V_{Add}}{1 - \frac{p_1}{p_2}}$$

errechnen; es handelt sich dabei um die sogenannte He-Dichte, auch als Skelettdichte oder Reindichte bezeichnet. Aus den Daten der Quecksilberporosimetrie (spez. Porenvolumen) und der Reichdichte können über einfache Formeln die Partikeldichte (auch als Rohdichte bezeichnet) und die Porosität berechnet werden.

Die Rohdichte erhält man durch die folgende Formel:

Rohdichte = 1 / (spez. Porenvolumen + 1 / Reindichte)

Die Porosität wird berechnet nach

$$\frac{\text{spez. Porenvolumen x 100}}{\text{spez. Porenvolumen + 1/Reindichte}}$$

Beispiel 1

Partikel wurden analog zum dem Standardverfahren hergestellt, wobei 20 ml 25%iges Ammoniumhydroxid und 7,4 ml 65%ige $HNO_3$ eingesetzt wurden und die Reaktion bei Raumtemperatur durchgeführt wurde. Im Auswertbereich von 5 - 0,036 $\mu$m Porengröße wurde eine He-Dichte von 1,865 $g/cm^3$, eine Rohdichte/Partikeldichte von 1,44 $g/cm^3$, ein spezifisches Porenvolumen von 0,156 $cm^3/g$ und ein mittlerer Porendurchmesser von 323 nm ermittelt. Die berechnete Porosität lag bei 23 %.

Beispiel 2

Partikel wurden analog zum Standardverfahren hergestellt, wobei 30 ml 30%iges Ammoniumhydroxid und 1,55 ml 85%ige $H_3PO_4$ eingesetzt wurden und die Reaktion bei Raumtemperatur durchgeführt wurde. Im Auswertbereich von 5 - 0,036 wurde eine He-Dichte von 1,724 $g/cm^3$, eine Rohdichte/Partikeldichte von 1,38 $g/cm^3$, ein spezifisches Porenvolumen von 0,143 $cm^3/g$ und ein mittlerer Porendurchmesser von 62,6 nm ermittelt. Die berechnete Porosität lag bei 20%.

Beispiel 3

Partikel wurden analog zum dem Standardverfahren hergestellt, wobei 17 ml 30%iges Ammoniumhydroxid und 0,7 ml 96%ige $H_2SO_4$ eingesetzt wurden und die Reaktion bei Raumtemperatur durchgeführt wurde. Im Auswertbereich von 5 - 0,036 wurde eine He-Dichte von 1,841 $g/cm^3$, eine Rohdichte/Partikeldichte von 1,55 $g/cm^3$, ein spezifisches Porenvolumen von 0,100 $cm^3/g$ und ein mittlerer Porendurchmesser von 96,2 nm ermittelt. Die berechnete Porosität lag bei 16%.

Beispiel 4

Partikel wurden analog zum Standardverfahren hergestellt, wobei 20 ml 25%iges Ammoniumhydroxid und 7,4 ml 65%ige $HNO_3$ eingesetzt wurden und die Reaktion bei Raumtemperatur durchgeführt wurde. Zusätzlich wurde Methylenblau in die Fällungslösung gegeben. Nach Ausfällung des Wasserglases zu den Silica-Schaumpartikeln und Waschen dieser Schaumpartikel zeigte sich, dass der Farbstoff eingebaut wurde, da der Feststoff die blaue Farbe angenommen hatte. Die Farbe konnte durch Waschen der Partikel nicht entfernt werden. Das Silica wurde in eine 3.5 molare NaOH Lösung gegeben. Dabei blieb der Feststoff zunächst als Sediment am Boden des Laugebades bestehen. Nach einiger Zeit begann sich das Silica zügig aufzulösen. Es blieb ein "blauer Bodensatz" am Boden des Laugenbades übrig. Dabei handelt es sich um den wieder freigesetzten Farbstoff; durch kurzes Umrühren konnte der "blaue Bodensatz" in der Lösung verteilt werden, welche sich dadurch leicht blau färbte. Dies zeigt, dass die Partikel mit einer Substanz beladen werden konnten, welche langsam freigesetzt werden kann, wenn Bedingungen herrschen, welche - schneller oder langsamer - zur Auflösung des Silicas führen (Verwitterung, Korrosion, pH Erhöhung). Deshalb sind die erfindungsgemäß beschriebenen Partikel zur Anwendung als Düngerspeicher; Speicher für reaktive Chemikalien in Füllstoffen und dergleichen geeignet.

**Patentansprüche**

1. Silica-Partikel, die zu mindestens 96 Gew.-% aus $SiO_2$ bestehen, in ihrem Inneren geschlossene Poren aufweisen, eine Reindichte von unter 2,00 $g/cm^3$, eine Rohdichte von unter 1,70 $g/cm^3$ und eine gemäß der Formel (spezifisches Porenvolumen x 100)/(spezifisches Porenvolumen +1/Reindichte) berechnete Porosität von 10 bis 30% besitzen.

2. Silica-Partikel nach Anspruch 1, die eine Reindichte von unter 1,95 $g/cm^3$, vorzugsweise von unter 1,90 $g/cm^3$, und/oder eine Rohdichte von unter 1,65 $g/cm^3$, vorzugsweise von unter $1,60/cm^3$ und/oder eine Porosität von über 15% und/oder von unter 25% besitzen.

3. Silica-Partikel nach Anspruch 1 oder 2, worin der Anteil an $SiO_2$ bei mindestens 98,5 Gew.-% liegt.

4. Verfahren zum Herstellen von Silica-Partikeln nach einem der Ansprüche 1 bis 3, **gekennzeichnet durch** die folgenden Schritte:

   a) Bereiten einer wässrigen Lösung, enthaltend mindestens 6 mol/l $NH_3$ und eine anorganische oder organische Säure mit einem pKs-Wert von 4,0 oder darunter,
   b) Zutropfen einer wässrigen Wasserglas-Lösung zu der wässrigen Lösung gemäß (a) in einer Menge, die nicht unter 10 Mol-%, bezogen auf die $NH_4OH$-Menge, liegt, wobei die Mischung gerührt und/oder mit Ultraschall behandelt wird, und
   c) A bfiltrieren, Waschen und Trocknen des Niederschlags.

5. Verfahren nach Anspruch 4, worin der pH-Wert der gemäß Schritt a) bereiteten wässrigen Lösung zwischen 10,5 und 11,5, vorzugsweise bei etwa 11 liegt.

6. Verfahren nach Anspruch 4 oder 5, worin die anorganische Säure ausgewählt ist unter Salzsäure, Salpetersäure, Phosphorsäure und Schwefelsäure, bevorzugt unter Phosphorsäure und Schwefelsäure.

7. Verfahren nach einem der Ansprüche 4 bis 6, worin die anorganische oder organische Säure in einer Konzentration von mindestens 0,05 mol/l eingesetzt wird.

8. Verfahren nach einem der Ansprüche 4 bis 7, worin die anorganische oder organische Säure einen pKs-Wert von 3,0 oder darunter besitzt.

9. Verfahren nach einem der Ansprüche 4 bis 8, worin die gemäß Schritt (b) zugetropfte wässrige Wasserglas-Lösung mindestens 15 mol/l Wasserglas enthält.

10. Verfahren nach einem der Ansprüche 4 bis 9, **dadurch gekennzeichnet, dass** es bei einer Temperatur von nicht über 25°C durchgeführt wird, sofern die die wässrige Lösung gemäß (a) Nitrationen aufweist, und bei einer Temperatur von nicht über 50°C durchgeführt wird, sofern die wässrige Lösung gemäß (a) Phosphationen aufweist.

11. Verwendung von Silica-Partikeln nach einem der Ansprüche 1 bis 3 als Füllstoff in Baumaterialien, in Kunststoffen, insbesondere Natur- oder Synthese-Kautschuk, als Isolationsfüllstoff zum Erreichen von Schallschutz und/oder Wärmedämmung oder als Speicherdepot für freizusetzende Stoffe.

## Claims

1. Silica particles consisting of at least 96 % by weight of $SiO_2$, having closed pores in the inside thereof, having a true density of less than 2.00 $g/cm^3$, a raw density of less than 1.70 $g/cm^3$ and a porosity as calculated according to the formula (specific pore volume x 100)/(specific pore volume + 1/true density) of 10 to 30%.

2. The silica particles according to claim 1, having a true density of less than 1.95 $g/cm^3$, preferably less than 1.90 $g/cm^3$, and/or a raw density of less than 1.65 $g/cm^3$, preferably less than $1.60/cm^3$ and/or a porosity of more than 15% and/or less than 25%.

3. The silica particles according to claim 1 or 2, wherein the content of $SiO_2$ is at least 98.5 % by weight.

4. A process for producing silica particles as described in any one of claims 1 to 3, **characterized by** the following steps:

   (a) preparing an aqueous solution containing at least 6 mol/l of $NH_3$ and an inorganic or organic acid having a pKs of 4.0 or less,
   (b) dropping an aqueous waterglass solution to the aqueous solution of (a) in an amount of not less than 10 mol-%, based on the amount of $NH_4OH$, wherein the mixture is stirred and/or treated with ultrasound,
   (c) filtering off, washing and drying the precipitate.

5. The process according to claim 4, wherein the pH of the aqueous solution prepared according to (a) is between 10.5 and 11.5, preferably about 11.

6. The process according to claim 4 or 5, wherein the inorganic acid is selected from hydrochloric acid, nitric acid, phosphoric acid and sulfuric acid, preferably from phosphoric acid and sulfuric acid.

7. The process according to any one of claims 4 to 6, wherein the inorganic or organic acid is used in a concentration of at least 0.05 mol/l.

8. The process according to any one of claim 4 to 7, wherein the inorganic or organic acid has a pKs of 3.0 or less.

9. The process according to any one of claims 4 to 8, wherein the waterglass solution added in step (b) contains at least 15 mol/l of waterglass.

10. The process according to any one of claims 4 to 9, **characterized in that** it is carried out at a temperature of not higher than 25°C, in case the aqueous solution of (a) contains nitrate ions, and at a temperature of not higher than 50°C, in case the aqueous solution of (a) contains phosphate ions.

11. The use of silica particles according to any one of claims 1 to 3 as a filler in building materials, in plastics, in particular natural or synthetic rubber, as insulating filler for achieving sound insulation and/or heat insulation or as a storage for substances to be released.

## Revendications

1. Particules de silice, qui se composent de $SiO_2$ à raison d'au moins 96 % en poids, qui présentent dans leur volume intérieur des pores fermés, et qui possèdent une masse volumique vraie de moins de 2,00 g/cm$^3$, une masse volumique apparente de moins de 1,70 g/cm$^3$ et une porosité, calculée selon la formule (volume spécifique des pores x 100)/volume spécifique des pores + 1/masse volumique vraie), de 10 à 30 %.

2. Particules de silice selon la revendication 1, qui possèdent une masse volumique vraie de moins de 1,95 g/cm$^3$, de préférence de moins de 1,90 g/cm$^3$, et/ou une masse volumique apparente de moins de 1,65 g/cm$^3$, de préférence de moins de 1,60 g/cm$^3$, et/ou une porosité de plus de 15 % et/ou de moins de 25 %.

3. Particules de silice selon la revendication 1 ou 2, dans lesquelles la part de $SiO_2$ se situe à au moins 98,5 % en poids.

4. Procédé de production de particules de silice selon l'une quelconque des revendications 1 à 3, **caractérisé par** les étapes suivantes:

    a) préparer une solution aqueuse, contenant au moins 6 mol/l de $NH_3$ et un acide minéral ou organique ayant une valeur pKs de 4,0 ou moins,
    b) ajouter goutte à goutte une solution aqueuse de verre soluble à la solution aqueuse suivant (a) en une quantité qui n'est pas inférieure à 10 mol-%, rapportée à la quantité de $NH_4OH$, dans lequel on agite le mélange et/ou on le traite aux ultrasons, et
    c) filtrer, laver et sécher le précipité.

5. Procédé selon la revendication 4, dans lequel la valeur de pH de la solution aqueuse préparée suivant a) se situe entre 10,5 et 11,5, de préférence à environ 11.

6. Procédé selon la revendication 4 ou 5, dans lequel l'acide minéral est choisi parmi l'acide chlorhydrique, l'acide nitrique, l'acide phosphorique et l'acide sulfurique, de préférence parmi l'acide phosphorique et l'acide sulfurique.

7. Procédé selon l'une quelconque des revendications 4 à 6, dans lequel on utilise l'acide minéral ou organique en une concentration d'au moins 0,05 mol/l.

8. Procédé selon l'une quelconque des revendications 4 à 7, dans lequel l'acide minéral ou organique possède une valeur pKs de 3,0 ou moins.

9. Procédé selon l'une quelconque des revendications 4 à 8, dans lequel la solution aqueuse de verre soluble ajoutée au goutte à goutte suivant l'étape (b) contient au moins 15 mol/l de verre soluble.

10. Procédé selon l'une quelconque des revendications 4 à 9, **caractérisé en ce qu'**on l'exécute à une température non supérieure à 25°C, dans la mesure où la solution aqueuse suivant (a) présente des ions nitrate, et on l'exécute à une température non supérieure à 50°C, dans la mesure où la solution aqueuse suivant (a) présente des ions phosphate.

11. Utilisation de particules de silice selon l'une quelconque des revendications 1 à 3 comme matière de charge dans des matériaux de construction, dans des matières plastiques, en particulier dans du caoutchouc naturel ou synthétique, comme matériau de remplissage d'isolation pour obtenir une protection sonore et/ou une isolation thermique ou comme dépôt de réserve pour des substances à libérer.

Figur 1

Figur 2

Figur 3

Figur 4

Figur 5

Figur 6

Figur 7

Figur 8

Figur 9

Figur 10

Figur 11

Figur 12

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1764344 A2
- US 6268424 B1
- US 5225177 A
- EP 0308165 A2
- EP 0535943 A1
- WO 9410087 A1
- EP 1295850 A1
- EP 0798266 A1
- WO 2010012638 A1
- EP 0937755 A1
- EP 0355295 A2
- US 4629507 A
- US 3798174 A
- WO 2013117583 A
- WO 2013117583 A1

### In der Beschreibung aufgeführte Nicht-Patentliteratur

- **G. J. DE A. A. SOLER-ILLIA et al.** *Chem. Rev.,* 2002, vol. 102 (11), 4093-4138
- **V. MEYNEN et al.** *Microporous and Mesoporous Materials,* 2007, vol. 104, 26-38
- **N. SHINOZAKI et al.** *J. Sol-Gel Sci. Technol.,* 2007, vol. 43, 275-282
- **J. ZURAWSKA et al.** Colloids and Surfaces A. *Physicochem. Eng. Aspects,* 2003, vol. 223, 201-214
- Modified Superparamagnetic Nanocomposite Microparticles for Highly Selective HgII or CuII Separation and Recovery from Aqueous Solutions. *ACS Applied Materials & Interfaces,* 2012, vol. 4, 5633-5642
- **MANDEL, K. et al.** Modified Superparamagnetic Nanocomposite Microparticles for Highly Selective HGII or CUII Separation and Recovery from Aqueous Solutions. *ACS Appl. Mater. Interfaces,* September 2012, vol. 4 (10), 5633-5642